# EUROPÄISCHE PATENTSCHRIFT

(11) **EP 1 008 500 B1**
(45) Veröffentlichungstag und Bekanntmachung des Hinweises auf die Patenterteilung: **04.01.2006**
(21) Anmeldenummer: 99118296.5
(22) Anmeldetag: 15.09.1999
(51) Int. Cl.: B60S 1/34

(54) **Vorrichtung mit gelenkig verbundenen Bauteilen und Verfahren zu dessen Herstellung**
Device with articulated elements and method to produce it
Dispositif avec éléments articulés et méthode pour sa réalisation

(30) Priorität: 10.12.1998 DE 19856961
(43) Veröffentlichungstag der Anmeldung: 14.06.2000
(73) Patentinhaber: ROBERT BOSCH GMBH, 70442 Stuttgart (DE)
(72) Erfinder: Daenen, Roger, 3770 Vlytingen-Riemst (BE)

(56) Entgegenhaltungen:
- WO-A-99/42346
- CH-A4- 601 064
- DE-A- 3 827 947
- DE-A- 19 639 593
- DE-B- 1 138 988
- FR-A- 1 292 344
- US-A- 4 932 097
- US-A- 5 349 717

## Beschreibung

### Stand der Technik

Die Erfindung geht aus von einer Vorrichtung und einem Verfahren nach der Gattung der unabhängigen Ansprüche.

Bei verschiedenen Vorrichtungen in der Technik werden Lagerstellen mit einem möglichst geringen Spiel gefordert, wie insbesondere bei Scheibenwischer für Kraftfahrzeuge (siehe z.B. Dokument DE19639593).

Bekannte Scheibenwischer besitzen einen Wischarm, der aus einem auf einer Antriebsachse befestigten Befestigungsteil, einem mit diesem über ein Kniegelenk verbundenes Gelenkteil und aus einer sich an das Gelenkteil starr anschließenden Wischstange aufgebaut ist. Ferner besitzt der Scheibenwischer ein Wischblatt, das ein Tragbügelsystem und eine von diesem gehaltene Wischleiste aufweist. Das Wischblatt ist am Wischarm angelenkt, indem ein hakenförmiges Ende der Wischstange zwischen zwei Seitenwangen des Tragbügelsystems greift und einen Gelenkbolzen umfaßt. Das so gebildete Gelenk führt das Wischblatt mit der Wischleiste über eine Kraftfahrzeugscheibe, wobei das Gelenkteil und das Tragbügelsystem es ermöglichen, daß sich die Wischleiste einer Wölbung der Kraftfahrzeugscheibe anpaßt. Ein erforderlicher Anpreßdruck der Wischleiste auf der Kraftfahrzeugscheibe wird mit mindestens einer Zugfeder erreicht, die das Befestigungsteil und das Gelenkteil gemeinsam mit der Wischstange über das Kniegelenk verspannt.

Die Form und Verbindung der einzelnen Bauteile des Wischarms werden durch unterschiedliche Anforderungen und Belastungen bestimmt, und zwar sollten sie möglichst spielfrei verbunden und torsionssteif, biegesteif und im Sichtfeld schmal ausgeführt sein, damit das Wischblatt schwingungsfrei und kontrolliert über die Kraftfahrzeugscheibe geführt werden kann und dabei im Sichtfeld wenig stört.

Das Befestigungsteil überträgt das Antriebsmoment von der Antriebsachse über das Gelenkteil und über die Wischstange auf das Wischblatt. Ferner bildet es einen Teil des Kniegelenks, über das das Befestigungsteil mit dem Gelenkteil mit der Zugfeder verspannt und in Richtung Kraftfahrzeugscheibe gedrückt wird. Im Befestigungsteil entstehen die größten Kräfte bzw. Momente parallel und senkrecht zur Kraftfahrzeugscheibe. Ferner wirken sich Verformungen und Spiel im unteren Bereich des Scheibenwischers besonders stark über die gesamte Länge aus und können durch einen Federeffekt zu ungleichmäßigen Wischgeschwindigkeiten führen. Das Befestigungsteil und der erste Teil des Gelenkteils müssen daher besonders biege- und torsionssteif ausgeführt und insbesondere mit dem Kniegelenk möglichst spielfrei verbunden werden.

Das Befestigungsteil wird in der Regel durch ein Spritzgußverfahren aus Kunststoff, Aluminium oder Zinkdruckguß hergestellt. Das Gelenkteil wird von einem Blechteil mit einem U-Profil gebildet, das das Befestigungsteil mit zwei Seitenwangen umgibt.

### Vorteile der Erfindung

Nach der im Anspruch 1 definierten Erfindung ist eine Gelenkachse mit der Herstellung eines ersten Bauteils, von diesem radial spielfrei umspritzt und mit einem zweiten Bauteil fest verbunden. Durch die erfindungsgemäße Vorrichtung und ein entsprechend erfindungsgemäßes Verfahren werden radiales Spiel vermieden und Fertigungsschritte eingespart, wie beispielsweise Bohren einer Lagerstelle im ersten Bauteil, Nachbearbeiten der Lagerstelle und gegebenenfalls das Einpressen einer Lagerbuchse. Das Bauteil kann aus Kunststoff oder metallischen Werkstoffen gegossen sein, wie Zink, Aluminium usw.

Befestigungsteil und Gelenkteil eines Wischarms können erfindungsgemäß spielfrei ausgeführt und das Wischverhalten und die Wischqualität können verbessert werden. Schwingungen und ruckartige Bewegungen bedingt durch Spiel zwischen dem Befestigungsteil und dem Gelenkteil werden vermieden.

In einer Ausgestaltung wird vorgeschlagen, daß die Gelenkachse in einer, vorzugsweise in beiden Längsrichtungen vom ersten Bauteil umspritzt bzw. fixiert ist. Die Gelenkachse kann radial und axial spielfrei im ersten Bauteil bzw. im Befestigungsteil gelagert werden. Der Formschluß kann in einer Richtung durch eine kegelförmige Kontur der Gelenkachse, durch einen Bund usw. und in beide Längsrichtungen besonders vorteilhaft durch eine konvexe, konkave oder wellenförmige Kontur der Gelenkachse erreicht werden. Ferner sind weitere von der Zylinderform abweichende und dem Fachmann als geeignet erscheinende Konturen denkbar.

Um die Reibung zu reduzieren, die Lebensdauer zu erhöhen und ein möglicherweise auftretendes Klemmen der Gelenkachse zu vermeiden, kann für die Gelenkachse ein Material mit besonderen Gleiteigenschaften verwendet oder die Gelenkachse vorteilhaft mit einem Material beschichtet werden, das die Gleiteigenschaften verbessert, beispielsweise mit Kunststoff, wie Tetrafluoräthylen, Sinterwerkstoff, Weißmetall, Bronze, Rotguß, Leichtmetall usw. Eine beschichtete zylindrische Gelenkachse kann leicht für die Montage der Vorrichtung bzw. des Befestigungsteils und des Gelenkteils aus dem Befestigungsteil entfernt und wieder eingeführt werden, nachdem das Befestigungsteil und das Gelenkteil zusammengeführt sind.

Ferner kann die Gelenkachse gemeinsam mit einer Lagerbuchse spielfrei umspritzt sein. Die Lagerbuchse kann aus festem, aus elastischem Material und/oder besonders vorteilhaft aus Material gebildet sein, das sich beim Umspritzen bedingt durch Temperatur und/oder Druck der Achsenkontur spielfrei anpaßt, wie insbesondere aus einer dünnwandigen Kunststofflagerbuchse, einer Kunststoffolie oder aus einem dünnwandig beschichteten Aluminiumgitter usw. Gelenkachsen mit konkaven, konvexen oder wellenförmigen Konturen können mit einer zylindrischen Lagerbuchse in eine Gußform des ersten Bauteils eingelegt werden. Paßt sich die Lagerbuchse beim Umspritzen der Kontur der Gelenkachse an, ist die Gelenkachse radial und axial spielfrei in der Lagerbuchse und im ersten Bauteil gelagert.

Eine feste Verbindung zwischen der Gelenkachse und dem zweiten Bauteil bzw. dem Gelenkteil kann kraftschlüssig, formschlüssig und/oder stoffschlüssig erreicht werden, wie beispielsweise durch Schweißen, Klemmen, Schrauben usw. Mit einer Gelenkachse, die über ein Gewinde am zweiten Bauteil befestigt ist, wird eine leichte Montage und insbesondere eine leichte Demontage ermöglicht. Die Gelenkachse kann dabei mit einem Außengewinde und einer Mutter und/oder mit einem Innengewinde und einer Schraube mit dem zweiten Bauteil verspannt oder mit einem Außengewinde direkt im zweiten Bauteil verschraubt sein usw. Ferner kann die Gelenkachse von einer Niete gebildet und über eine Nietverbindung fest mit dem zweiten Bauteil verbunden sein. Nietverbindungen können leicht automatisiert und in Großserien kostengünstig hergestellt werden, wie insbesondere bei Wischarmen für Scheibenwischanlagen.

Um eine Lagerung mit geringem Spiel und insbesondere eine spielfreie Lagerung zu erreichen, muß neben einer spielfrei gelagerten Gelenkachse eine spielfrei feste Verbindung zwischen der Gelenkachse und dem zweiten Bauteil geschaffen werden. Hierfür wird vorgeschlagen, die Gelenkachse an beiden Enden mit einem Anschlag auszuführen, an denen das zweite Bauteil kraftschlüssig und formschlüssig spielfrei befestigt ist. Reibung zwischen dem Befestigungsteil und dem Gelenkteil kann vermieden oder auf ein bestimmtes Maß begrenzt werden, ohne die Verbindung zwischen der Gelenkachse und dem Gelenkteil negativ zu beeinflussen. Es kann ein definierter Abstand zwischen dem zweiten Bauteil und dem ersten Bauteil eingehalten werden.

Ist die Gelenkachse ein angebohrter Nietstift, kann dieser beidseitig durch Umformen mit dem zweiten Bauteil kraft- und formschlüssig verbunden oder mit zusätzlichen, in Bohrungen eingepreßten Nieten am zweiten Bauteil festigt werden. Bei einem Wischarm umgibt das Gelenkteil das Befestigungsteil mit zwei Seitenwangen eines U-Profils. Das Gelenkteil ist über die Seitenwangen fest mit der Gelenkachse und gelenkig mit dem Befestigungsteil verbunden. Mit separaten Nieten kann die Gelenkachse vorteilhaft kürzer als die lichte Weite zwischen den Seitenwangen ausgeführt werden. Das Gelenkteil kann dadurch auf das Befestigungsteil geschoben und mit der Gelenkachse in Öffnungen in den Seitenwangen fest verbunden werden, ohne daß dafür die Seitenwangen V-förmig aufgebogen werden müssen.

In einer weiteren Ausgestaltung sind die Verbindungsstellen zwischen der Gelenkachse und dem zweiten Bauteil in Einbuchtungen der Seitenwangen versenkt, wodurch eine formschöne Verbindung ohne überstehende Kanten geschaffen werden kann. Die Einbuchtungen können vor der Montage oder besonders vorteilhaft bei der Montage in die Seitenwangen eingebracht werden. Werden die Einbuchtungen bei der Montage eingebracht, kann die lichte Weite der Seitenwangen größer als die Länge der Gelenkachse gewählt werden. Die Seitenwangen werden bei der Montage mit Öffnungen auf die Gelenkachse gezogen und mit dieser fest verbunden. Es wird eine leichte Montage erreicht, ohne die Seitenwangen nach außen aufbiegen zu müssen und ferner sind die Verbindungsstellen der Gelenkachse mit dem zweiten Bauteil in Einbuchtungen der Seitenwangen versenkt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischarm mit einem Wischblatt von oben,
- Fig. 2: einen Schnitt entlang der Linie II-II in Fig. 1 ohne Wischblatt,
- Fig. 3: einen Schnitt entlang der Linie III-III in Fig. 2,
- Fig. 4: eine Gußform für ein Befestigungsteil nach Fig. 3 mit eingelegter Gelenkachse und Lagerbuchse,
- Fig. 5: eine Vorrichtung nach Fig. 3 mit einer konkaven Gelenkachse,
- Fig. 6: eine Gußform für ein Befestigungsteil nach Fig. 5 mit eingelegter Gelenkachse und Lagerbuchse,
- Fig. 7: eine Vorrichtung nach Fig. 3 mit einer konvexen Gelenkachse,
- Fig. 8: eine Gußform für ein Befestigungsteil nach Fig. 7 mit eingelegter beschichteter Gelenkachse,
- Fig. 9: eine Variante nach Fig. 3 mit einem Nietstift und separaten Nieten,
- Fig. 10: eine Vorrichtung nach Fig. 9 im montierten Zustand,
- Fig. 11: eine Variante nach Fig. 9,
- Fig. 12: eine Variante nach Fig. 3 mit einer über ein Gewinde befestigten Gelenkachse,
- Fig. 13: eine Variante nach Fig. 12 und
- Fig. 14: eine Vorrichtung nach Fig. 13 im montierten Zustand.

### Beschreibung der Ausführungsbeispiele

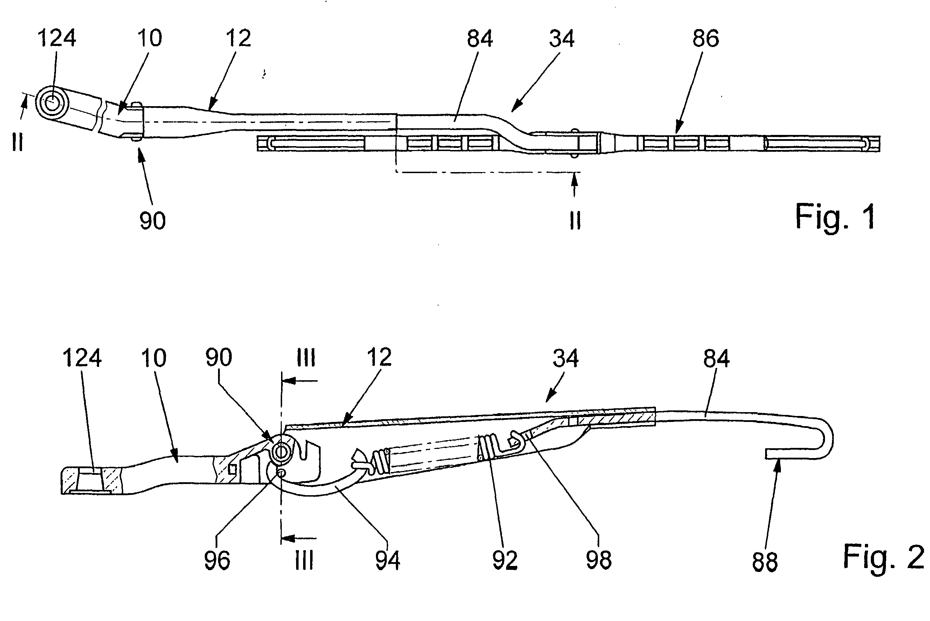

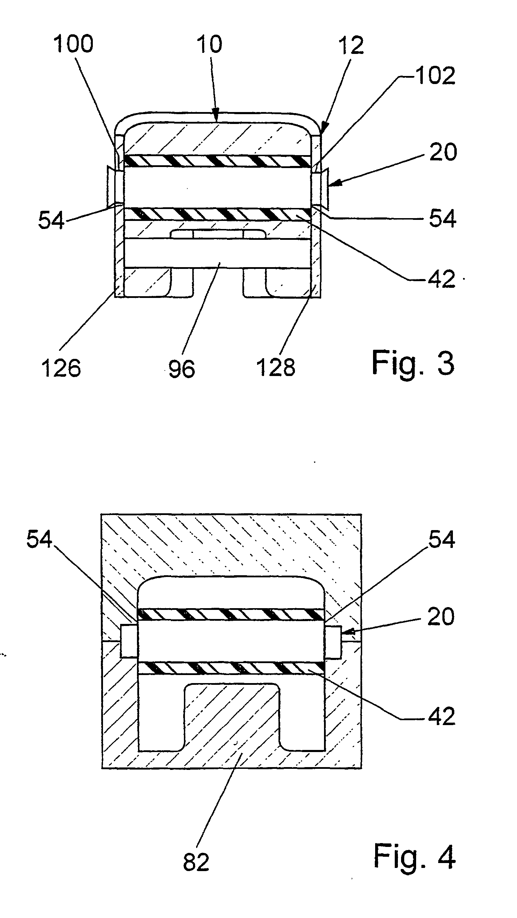

Fig. 1 zeigt einen Wischarm 34, der aus einem Befestigungsteil 10 und einem Gelenkteil 12 mit einer Wischstange 84 aufgebaut ist. An dem Wischarm 34 ist ein Wischblatt 86 an einem Bügelteil 88 der Wischstange 84 angelenkt (Fig. 2). Das Befestigungsteil 10 besitzt an einem Ende eine Lagerstelle 124, an der es an einer Antriebswelle eines nicht näher dargestellten Wischerantriebs befestigt ist. An seinem anderen Ende bildet es mit dem Gelenkteil 12 ein Gelenk 90, indem Seitenwangen 126, 128 des Gelenkteils 12 im Bereich des Gelenks 90 Seitenwände des Befestigungsteils 10 überdecken und über eine Gelenkachse 20 schwenkbar verbunden sind (Fig. 2 und 3). Eine Zugfeder 92, die über einen Bügel 94 an einem ersten Querstift 96 am Befestigungsteil 10 eingehängt ist (Fig. 2) und mit ihrem anderen Ende in einer Öffnung 98 der Wischstange 84 angreift, hält das Gelenk 90 in einer abgewinkelten Stellung und erzeugt somit eine Anpreßkraft des Wischblatts 86 an eine Fahrzeugscheibe.

Das Befestigungsteil 10 wird in einem Spritzgußverfahren hergestellt. Erfindungsgemäß ist die Gelenkachse 20 mit der Herstellung des Befestigungsteils 10 von diesem radial spielfrei umspritzt (Fig. 3). Die Gelenkachse 20 wird mit einer Kunststofflagerbuchse 42 in eine Gußform 82 des Befestigungsteils 10 eingelegt (Fig. 4). Beim Spritzgießen des Befestigungsteils 10 legt sich die Lagerbuchse 42 durch Temperatur und/oder Druck spielfrei an die Gelenkachse 20 und das Gußmaterial des Befestigungsteils 10 spielfrei an die Lagerbuchse 42 an. Die Gelenkachse 20 ist radial spielfrei im Befestigungsteil 10 gelagert. Das Gelenkteil 12 besitzt ein leicht nach außen aufgebogenes U-Profil und wird mit den Seitenwangen 126, 128 über das Befestigungsteil 10 geschoben bis Öffnungen 100, 102 in den Seitenwangen 126, 128 über der Gelenkachse 20 zum liegen kommen. Die Gelenkachse 20 ist als Niete ausgeführt. Beim Nieten werden die Seitenwangen 126, 128 jeweils auf Anschläge 54 der Gelenkachse 20 gepreßt. Beide Enden der Gelenkachse 20 werden verformt und kraft- und formschlüssig mit dem Gelenkteil 12 fest und spielfrei verbunden. Es wird eine dauerhaft feste und spielfreie Verbindung zwischen dem Gelenkteil 10 und der Gelenkachse 20 geschaffen, ohne daß die Seitenwangen 126, 128 beim Nieten auf das Befestigungsteil 10 gedrückt und zu unerwünschter Reibung führen. In Längsrichtung 36, 38 kann ein definiertes Spiel zwischen dem Gelenkteil 12 und dem Befestigungsteil 10 eingestellt werden.

Anstatt das U-Profil des Gelenkteils 12 für die Montage leicht aufzubiegen, kann eine Öffnung mit einem größeren Durchmesser in einer Seitenwange als Tiefziehöffnung mit einem Bund ausgeführt sein. Die Gelenkachse 20 wird nach dem Gießen des Befestigungsteils 10 aus diesem entfernt. Das Gelenkteil wird auf das Befestigungsteil 10 geschoben und die Gelenkachse 20 durch die Tiefziehöffnung im Gelenkteil in das Befestigungsteil 10 und in die zweite Öffnung in der zweiten Seitenwange des Gelenkteils eingeführt. Beim Nieten wird der Bund der Tiefziehöffnung flach gedrückt, der Durchmesser der Tiefziehöffnung verkleinert und beide Seitenwangen werden fest mit der Gelenkachse 20 verbunden.

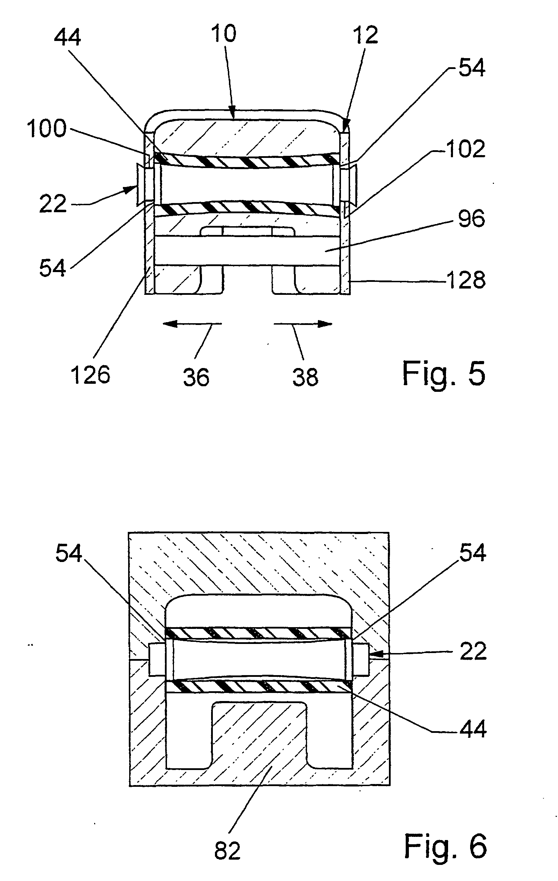

In Fig. 6 ist eine konkave Gelenkachse 22 in die Gußform 82 des Befestigungsteils 10 eingelegt. Gleichbleibende Bauteile werden grundsätzlich mit den gleichen Bezugszeichen beziffert. Die Gelenkachse 22 ist mit einer zylindrischen Kunststofflagerbuchse 44 umgeben. Die Lagerbuchse 44 legt sich beim Spritzgießen des Befestigungsteils 10 spielfrei an die Kontur der Gelenkachse 22 und das Material des Befestigungsteils 10 legt sich spielfrei an der Lagerbuchse 44 an. Die Gelenkachse 22 ist radial spielfrei gelagert und in beiden axialen Längsrichtungen 36, 38 von dem Befestigungsteil 10 formschlüssig spielfrei fixiert (Fig. 5). Die Gelenkachse 22 wird wie beim Ausführungsbeispiel in Fig. 3 und 4 mit dem Gelenkteil 12 vernietet.

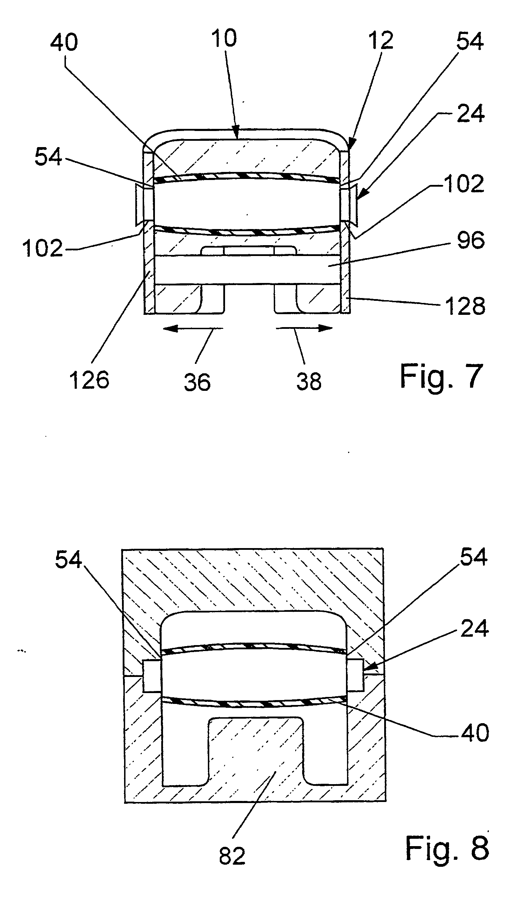

In Fig. 7 und 8 besitzt eine Gelenkachse 24 eine konvexe Kontur, die wie im Ausführungsbeispiel in Fig. 5 und 6 zu einer axial und radial spielfreien Lagerung führt. Ferner ist die Gelenkachse 24 mit Tetrafluoräthylen 40 beschichtet. Die Gleiteigenschaft der Gelenkachse 24 im Befestigungsteil 10 wird verbessert. Ferner kann eine separate Lagerbuchse und der Aufwand, diese in die Gußform 82 einzulegen, eingespart werden.

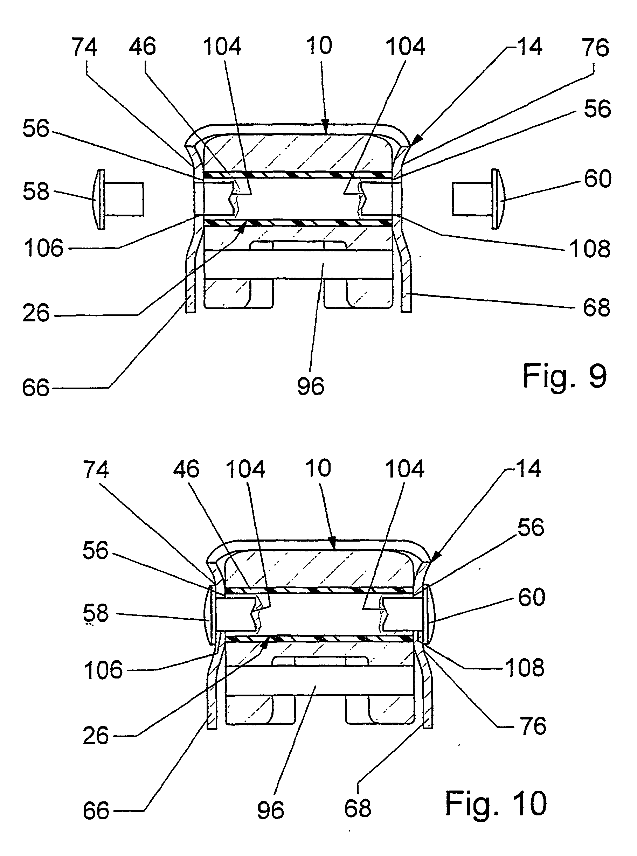

In den Ausführungsbeispielen in Fig. 9, 10 und 11 ist ein angebohrter Nietstift als Gelenkachse 26, 28 ausgeführt. Die Gelenkachsen 26, 28 werden mit separaten Nieten 58, 60, 62, 64 mit Seitenwangen 66, 68 eines Gelenkteils 14 fest verbunden. Die Nieten 58, 60, 62, 64 werden in Bohrungen der Gelenkachse 26, 28 gedrückt und die Seitenwangen 66, 68 durch Nietköpfe auf Stirnseiten der Gelenkachse 26, 28 gepreßt, wobei die Stirnseiten als Anschlag 56 dienen (Fig. 10). Material der Nieten 58, 60, 62, 64 wird von einem Kegel 104 in der Gelenkachse 26, 28 radial nach außen verdrängt, wodurch die Nieten 58, 60, 62, 64 fest und spielfrei mit der Gelenkachse 26, 28 und in Öffnungen 106, 108 der Seitenwangen 66, 68 mit dem Gelenkteil 14 kraftschlüssig und formschlüssig verbunden sind. Die Gelenkachse 26, 28 kann durch die separaten Nieten 58, 60, 62, 64 kürzer als eine lichte Weite der Seitenwangen 66, 68 ausgeführt werden. Das Gelenkteil 14 kann auf das Befestigungsteil 10 mit eingesteckter Gelenkachse 26, 28 aufgeschoben und anschließend an der Gelenkachse 26, 28 befestigt werden, ohne daß die Seitenwangen 66, 68 nach außen aufgebogen werden müssen.

Die Nietköpfe sind in Einbuchtungen 74, 76 versenkt, wobei die Nietköpfe der Nieten 62, 64 zudem mit den Seitenwangen 66, 68 bündig abschließen. Das Gelenkteil 14 und das Befestigungsteil 10 sind formschön gelenkig verbunden und überstehende Kanten werden vermieden, die zu Verletzungen führen können, beispielsweise beim Reinigen der Windschutzscheibe.

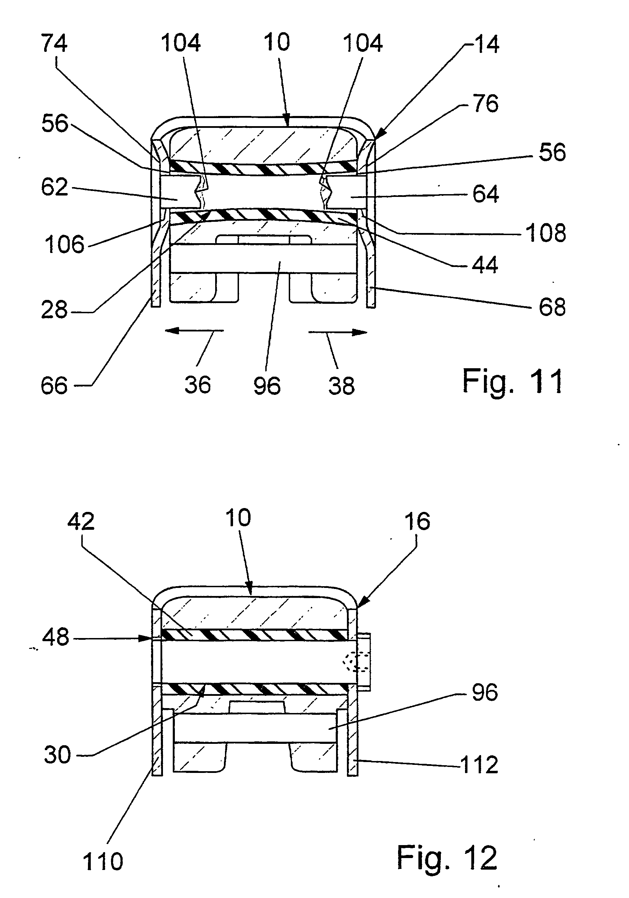

Als Lagerbuchse 46 dient im Ausführungsbeispiel in Fig. 9 und 10 eine Kunststoffolie, die gemeinsam mit der Gelenkachse 26 umspritzt ist. Die Gelenkachse 28 im Ausführungsbeispiel in Fig. 11 ist wie das Ausführungsbeispiel in Fig. 5 durch eine konkave Kontur radial und axial spielfrei im Befestigungsteil 10 über die Lagerbuchse 44 gelagert.

In Fig. 12 dient eine Schraube als Gelenkachse 30, die mit einem Gewinde 48 fest mit einer Seitenwange 110 eines Gelenkteils 16 verschraubt und an einer zweiten Seitenwange 112 mit einem Schraubenkopf abgestützt ist. Die Gelenkachse 30 ist gemeinsam mit der Lagerbuchse 42 umspritzt wie die Gelenkachse 20 in Fig. 3 und 4. Zur Montage des Gelenkteils 16 auf dem Befestigungsteil 10 kann jedoch die Gelenkachse 30 zuerst entfernt und anschließend durch das Gelenkteil 16 und das Befestigungsteil 10 geführt und befestigt werden. Ferner können das Befestigungsteil 10 und das Gelenkteil 18 mit der Gelenkachse 30 leicht demontiert werden.

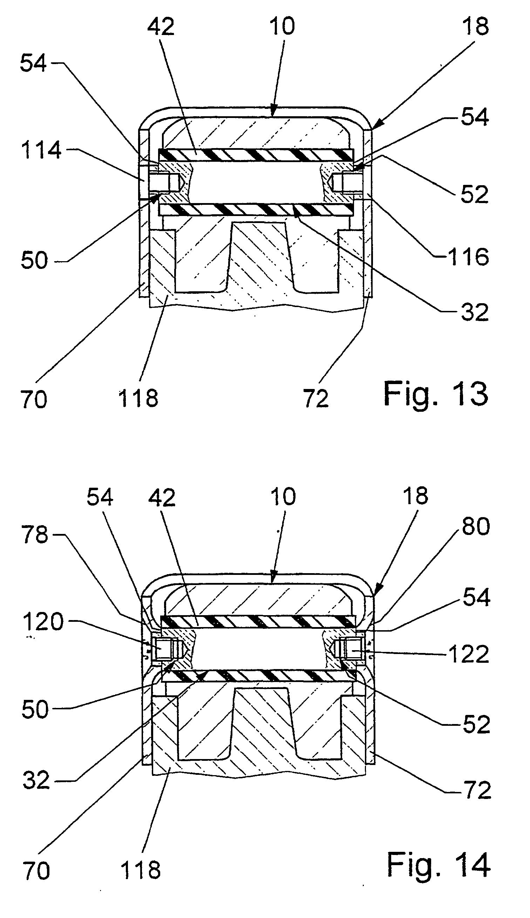

In Fig. 13 und 14 besitzt eine Gelenkachse 32 zwei Innengewinde 50, 52. Nachdem die Gelenkachse 32 mit der Lagerbuchse 42 umspritzt ist, wird ein Gelenkteil 18 mit seinen Seitenwangen 70, 72 auf das Befestigungsteil 10 geschoben, bis Öffnungen 114, 116 in den Seitenwangen 70, 72 über der Gelenkachse 32 zum liegen kommen. Dabei wird das Befestigungsteil 10 von einer Haltevorrichtung 118 gehalten, die von einem Teil einer Gußform des Befestigungsteils 10 gebildet sein kann.

Anschließend wird die Gelenkachse 32 mit zwei Schrauben 120, 122 verschraubt (Fig. 14). Die Seitenwangen 70, 72 werden auf Anschläge 54 der Gelenkachse 32 gezogen und kraft- und formschlüssig befestigt. Ferner entstehen Einbuchtungen 78, 80 in den Seitenwangen 70, 72, in denen die Schraubenköpfe nach der Montage bündig abschließend versenkt sind. Die Haltevorrichtung 118 hält das Befestigungsteil 10 während der Montage fest in einer Stellung, wodurch die Montage leicht automatisiert werden kann. Ferner verhindert die Haltevorrichtung 118, daß beim Verschrauben der Seitenwangen 70, 72, diese nach innen in Richtung Befestigungsteil 10 gebogen werden.

## Patentansprüche

1. Vorrichtung mit einem ersten durch Spritzguß hergestellten Bauteil (10) und einem zweiten Bauteil (12, 14, 16, 18), die über eine im ersten Bauteil (10) drehbar gelagerte Gelenkachse (20, 22, 24, 26, 28, 30, 32) gelenkig verbunden sind, **dadurch gekennzeichnet, daß** die Gelenkachse (20, 22, 24, 26, 28, 30, 32) mit der Herstellung des ersten Bauteils (10), von diesem radial spielfrei umspritzt und mit dem zweiten Bauteil (12, 14, 16, 18) fest verbunden ist und das erste Bauteil (10) ein Befestigungsteil und das zweite Bauteil (12, 14, 16, 18) ein Gelenkteil eines Wischarms (34) ist.

2. Vorrichtung nach einem der vorhergehenden Ansprüche, **dadurch gekennzeichnet, daß** die Gelenkachse (22, 24, 28) in einer oder in beiden axialen Längsrichtungen (36, 38) vom ersten Bauteil (10) formschlüssig fixiert ist.

3. Vorrichtung nach Anspruch 2, **dadurch gekennzeichnet, daß** die Gelenkachse (22, 24, 28) eine konkave, konvexe oder wellenförmige Außenkontur aufweist.

4. Vorrichtung nach einem der vorhergehenden Ansprüche, **dadurch gekennzeichnet, daß** die Gelenkachse (24) mit einem die Gleitfähigkeit verbessernden Material (40) beschichtet ist.

5. Vorrichtung nach einem der Ansprüche 1 bis 3, **dadurch gekennzeichnet, daß** eine Lagerbuchse (42, 44, 46) zwischen der Gelenkachse (20, 22, 26, 28, 30, 32) und dem ersten Bauteil (10) angeordnet ist, die durch das Umspritzen der Achsenkontur spielfrei angepaßt ist.

6. Vorrichtung nach Anspruch 5, **dadurch gekennzeichnet, daß** die Lagerbuchse (46) von einer Kunststoffolie gebildet ist.

7. Vorrichtung nach einem der vorhergehenden Ansprüche, **dadurch gekennzeichnet, daß** die Gelenkachse (30, 32) über ein Gewinde (48, 50, 52) am zweiten Bauteil (16, 18) befestigt ist.

8. Vorrichtung nach einem der Ansprüche 1 bis 6, **dadurch gekennzeichnet, daß** die Gelenkachse (20, 22, 24, 26, 28) eine Niete ist.

9. Vorrichtung nach Anspruch 1, **dadurch gekennzeichnet, daß** die Gelenkachse (20, 22, 24, 26, 28, 32) an jedem Ende einen Anschlag (54, 56) aufweist, an denen das zweite Bauteil (12, 14, 18) kraft- und formschlüssig spielfrei befestigt ist.

10. Vorrichtung nach Anspruch 8 oder 9, **dadurch gekennzeichnet, daß** die Gelenkachse (26, 28) ein angebohrter Nietstift und mit separaten Nieten (58, 60, 62, 64) am zweiten Bauteil (14) befestigt ist.

11. Vorrichtung nach einem der vorhergehenden Ansprüche, **dadurch gekennzeichnet, daß** das zweite Bauteil (14, 18) das erste Bauteil (10) mit Seitenwangen (66, 68, 70, 72) umgibt und die Verbindungsstellen der Gelenkachse (26, 28, 32) und dem zweiten Bauteil (14, 18) in Einbuchtungen (74, 76, 78, 80) der Seitenwangen (66, 68, 70, 72) versenkt sind.

12. Verfahren zur Herstellung einer Vorrichtung nach einem der vorhergehenden Ansprüche, **dadurch gekennzeichnet, daß** die Gelenkachse (20, 22, 24, 26, 28, 30, 32) in eine Gußform (82) des ersten Bauteils (10) eingelegt und vom ersten Bauteil (10) spielfrei umspritzt wird, und das zweite Bauteil (18) mit zwei Seitenwangen (70, 72) über das erste Bauteil (10) mit der Gelenkachse (32) geschoben wird und anschließend die Seitenwangen (70, 72) beim Verbinden der Gelenkachse (32) mit dem zweiten Bauteil (18) auf Anschläge (54) der Gelenkachse (32) gezogen werden.

13. Verfahren nach Anspruche 12, **dadurch gekennzeichnet, daß** die Gelenkachse (20, 22, 26, 28, 30, 32) gemeinsam mit einer Lagerbuchse (42, 44, 46) umspritzt wird und sich die Lagerbuchse (42, 44, 46) beim Umspritzen bedingt durch Temperatur und/oder Druck an die Kontur der Gelenkachse (20, 22, 26, 28, 30, 32) spielfrei anpaßt.

## Claims

1. Device with a first element (10) produced by injection moulding and a second element (12, 14, 16, 18), which elements are connected in an articulated manner via an articulated spindle (20, 22, 24, 26, 28, 30, 32) mounted rotatably in the first element (10), **characterized in that**, with the production of the first element (10), the articulated spindle (20, 22, 24, 26, 28, 30, 32) is encapsulated by injection moulding radially in a play-free manner by the latter and is connected fixedly to the second element (12, 14, 16, 18), and the first element (10) is a fastening part and the second element (12, 14, 16, 18) is an articulated part of a wiper arm (34).

2. Device according to Claim 1, **characterized in that** the articulated spindle (22, 24, 28) is fixed in a form-fitting manner in one or in both axial longitudinal directions (36, 38) by the first element (10).

3. Device according to Claim 2, **characterized in that** the articulated spindle (22, 24, 28) has a concave, convex or wave-shaped outer contour.

4. Device according to one of the preceding claims, **characterized in that** the articulated spindle (24) is coated with a material (40) improving the slidability.

5. Device according to one of Claims 1 to 3, **characterized in that** a bearing bushing (42, 44, 46) is arranged between the articulated spindle (20, 22, 26, 28, 30, 32) and the first element (10) and is matched in a play-free manner to the outer contour by the encapsulation by injection moulding.

6. Device according to Claim 5, **characterized in that** the bearing bushing (46) is formed from a plastic film.

7. Device according to one of the preceding claims, **characterized in that** the articulated spindle (30, 32) is fastened to the second element (16, 18) via a thread (48, 50, 52).

8. Device according to one of Claims 1 to 6, **characterized in that** the articulated spindle (20, 22, 24, 26, 28) is a rivet.

9. Device according to the precharacterizing clause of Claim 1, **characterized in that** at each end the articulated spindle (20, 22, 24, 26, 28, 32) has a stop (54, 56) to which the second element (12, 14, 18) is fastened in a frictional and form-fitting play-free manner.

10. Device according to Claim 8 or 9, **characterized in that** the articulated spindle (26, 28) is a centre-punched rivet pin and is fastened to the second element (14) by separate rivets (58, 60, 62, 64).

11. Device according to one of the preceding claims, **characterized in that** the second element (14, 18) surrounds the first element (10) with side cheeks (66, 68, 70, 72) and the connecting points of the articulated spindle (26, 28, 32) and of the second element (14, 18) are recessed in indentations (74, 76, 78, 80) of the side cheeks (66, 68, 70, 72).

12. Method for producing a device according to one of the preceding claims, **characterized in that** the articulated spindle (20, 22, 24, 26, 28, 30, 32) is placed into a casting mould (82) of the first element (10) and is encapsulated by injection moulding in a play-free manner by the first element (10), and the second element (18) is pushed with two side cheeks (70, 72) over the first element (10) with the articulated spindle (32) and subsequently, when the articulated spindle (32) is connected to the second element (18), the side cheeks (70, 72) are drawn onto stops (54) of the articulated spindle (32).

13. Method according to Claim 12, **characterized in that** the articulated spindle (20, 22, 26, 28, 30, 32) is encapsulated by injection moulding together with a bearing bushing (42, 44, 46) and, during the encapsulation by injection moulding, the bearing bushing (42, 44, 46), because of the temperature and/or pressure, is matched in a play-free manner to the contour of the articulated spindle (20, 22, 26, 28, 30, 32).

## Revendications

1. Dispositif comportant un premier composant (10) fabriqué par moulage par injection et un deuxième composant (12, 14, 16, 18) reliés par articulation au moyen d'un axe d'articulation (20, 22, 24, 26, 28, 30, 32) monté de façon à pouvoir tourner dans le premier composant (10),
**caractérisé en ce que**
l'axe d'articulation (20, 22, 24, 26, 28, 30, 32) est enrobé radialement sans jeu par le premier composant (10) lors de sa fabrication et est relié à demeure au deuxième composant (12, 14, 16, 18), et
le premier composant (10) est une pièce de fixation et le deuxième composant (12, 14, 16, 18) est une pièce d'articulation d'un bras d'essuie-glace (34).

2. Dispositif selon la revendication 1,
**caractérisé en ce que**
l'axe d'articulation (22, 24, 28) est fixé par combinaison de formes dans une ou dans les deux directions longitudinales (36, 38) axiales par le premier composant (10).

3. Dispositif selon la revendication 2,
**caractérisé en ce que**
l'axe d'articulation (22, 24, 28) présente un contour extérieur concave, convexe ou ondulé.

4. Dispositif selon l'une des revendications précédentes,
**caractérisé en ce que**
l'axe d'articulation (24) est revêtu d'un matériau (40) qui améliore le glissement.

5. Dispositif selon l'une des revendications 1 à 3,
**caractérisé en ce que**
un coussinet (42, 44, 46) ajusté sans jeu du fait de l'enrobage du contour de l'axe est placé entre l'axe d'articulation (20, 22, 26, 28, 30, 32) et le premier composant (10).

6. Dispositif selon la revendication 5,
**caractérisé en ce que**
le coussinet (46) est formé d'une feuille en matière plastique.

7. Dispositif selon l'une des revendications précédentes,
**caractérisé en ce que**
l'axe d'articulation (30, 32) est fixé au deuxième composant (16, 18) par l'intermédiaire d'un filetage (48, 50, 52).

8. Dispositif selon l'une des revendications 1 à 6,
**caractérisé en ce que**
l'axe d'articulation (20, 22, 24, 26, 28) est un rivet.

9. Dispositif selon la partie introductive de la revendication 1,
**caractérisé en ce que**
l'axe d'articulation (20, 22, 24, 26, 28, 30, 32) comporte à chaque extrémité une butée (54, 56) à laquelle est fixé sans jeu le deuxième composant (12, 14, 18) par combinaison de formes et de forces.

10. Dispositif selon la revendication 8 ou 9,
**caractérisé en ce que**
l'axe d'articulation (26, 28) est un rivet à tige percée et est fixé au deuxième composant (14) à l'aide de rivets (58, 60, 62, 64) séparés.

11. Dispositif selon l'une des revendications précédentes,
**caractérisé en ce que**
le deuxième composant (14, 18) entoure le premier composant (10) par des joues latérales (66, 68, 70, 72) et les points de liaison entre l'axe d'articulation (26, 28, 32) et le deuxième composant (14, 18) sont enfoncés dans des creux (74, 76, 78, 80) des joues latérales (66, 68, 70, 72).

12. Procédé pour fabriquer un dispositif selon l'une des revendications précédentes,
**caractérisé en ce que**
l'axe d'articulation (20, 22, 24, 26, 28, 30, 32) est introduit dans un moule de coulée (82) du premier composant (10) et est enrobé sans jeu par le premier composant (10) et
le deuxième composant (18) comportant deux joues latérales (70, 72) est poussé sur le premier composant (10) comportant l'axe d'articulation (32) et ensuite les joues latérales (70, 72) sont embouties sur les butées (54) de l'axe d'articulation (32) lorsque l'axe d'articulation (32) est relié au deuxième composant (18).

13. Procédé selon la revendication 12,
**caractérisé en ce que**
l'axe d'articulation (20, 22, 24, 26, 28, 30, 32) est enrobé conjointement avec un coussinet (42, 44, 46) et le coussinet (42, 44, 46) s'adapte au contour de l'axe d'articulation (20, 22, 26, 28, 30, 32) lors de l'enrobage sous l'effet de la température et/ou de la pression.
